# EUROPEAN PATENT SPECIFICATION

(11) **EP 3 094 293 B1**
(45) Date of publication and mention of the grant of the patent: **22.11.2017**
(21) Application number: 15708270.2
(22) Date of filing: 09.01.2015
(51) Int. Cl.: A61G 1/04, A61G 7/057, B60N 2/66, B60N 2/70, B60N 2/44

(54) **SUPPORT DEVICE**
STÜTZVORRICHTUNG
DISPOSITIF DE SUPPORT

(30) Priority: 13.01.2014 IT MI20140032
(43) Date of publication of application: 23.11.2016
(73) Proprietor: Advance Kites S.r.l., 25057 Sale Marasino (BS) (IT)
(72) Inventor: MAZZUCCHELLI, Alessandro, I - 25057 Sale Marasino (Brescia) (IT)
(74) Representative: Lunati & Mazzoni S.r.L.
(86) International application number: PCT/IB2015/050161
(87) International publication number: WO 2015/104676

(56) References cited:
- EP-A1- 2 149 475
- EP-A2- 0 110 144
- EP-A2- 0 317 726
- DE-A1- 1 405 329
- DE-A1- 3 735 428
- DE-A1- 4 335 778
- DE-A1- 19 910 427
- GB-A- 2 344 514

## Description

The present invention relates to a support device, of the type as recited in the preamble of Claim 1 and to a method of use of said support device as recited in the preamble of Claim 10 (see, for example, EP 2 149 475 A1). Various types of support devices are currently known of, such as seats for vehicles, devices for parts of the body, such as belts for weights and the like, for backpacks supported by the body, for sports and/or medical equipment constrained to the body, containers for packaging and so forth.

Such devices may comprise various expedients to be more comfortable or cushioned. For example, in addition to the above-mentioned EP 2 149 475 A1, similar devices are described in patent applications: EP-A-0 317 726 A2, DE-A-199 10 427 A1 and DE-A-37 35 428 A1. For example, the seats have cushions and the like suitable to ensure comfort and, in addition, in order to further improve the comfort, the seat may comprise, between the cushion and the cover, one or more inflatable air chambers, known as bladders, such as to modify the shape of the seat, adapting it to the needs of the user. The bladders are then applicable to other types of seats or various support devices. The prior art described above has several significant drawbacks.

A first significant drawback is represented by the fact that the support devices are not particularly comfortable due to the inability of the air chambers to adapt to the body portion adjacent thereto.

In fact, when inflated, the air chambers and, consequently, the support devices tend to assume a round shape and are therefore unable to support the body or other objects in an appropriate manner.

In this situation the technical purpose of the present invention is to devise a support device able to substantially overcome the drawbacks mentioned above.

Within the sphere of said technical purpose one important aim of the invention is to make a support device which is comfortable or adapted to the shape of the object it covers.

The technical purpose and specified aims are achieved by a support device as claimed in the appended Claim 1 and corresponding method Claim 10. Preferred embodiments are disclosed by the dependent claims.

The characteristics and advantages of the invention are clearly evident from the following detailed description of a preferred embodiment thereof, with reference to the accompanying drawings, in which:

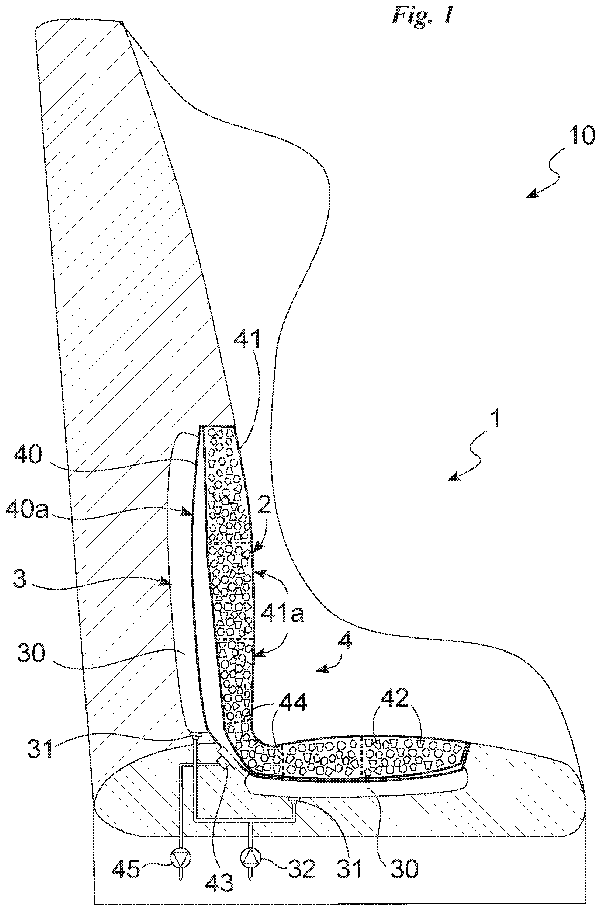

**Fig. 1** shows a support device according to the invention in a first configuration;

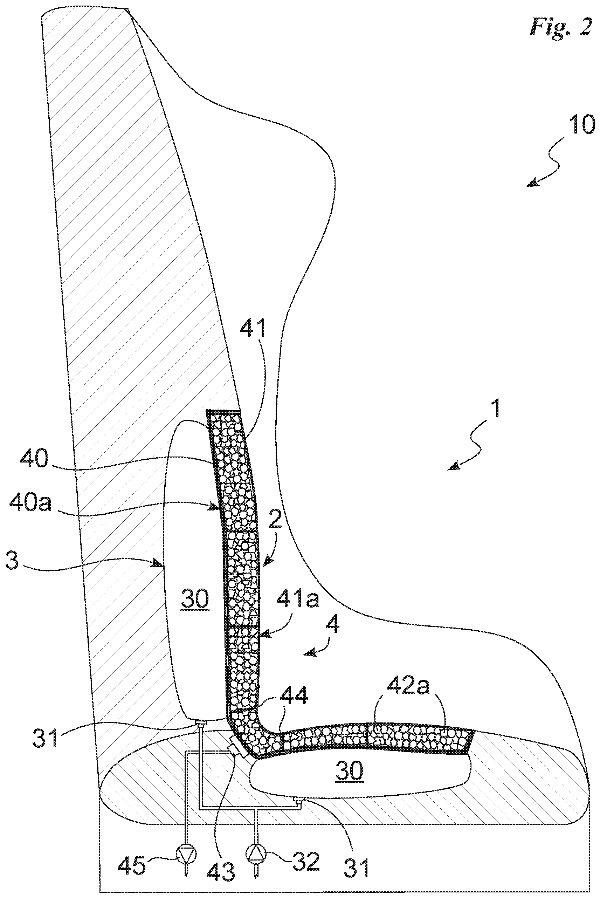

**Fig. 2** shows the device in Fig 1 in a second configuration.

With reference to said drawings, reference numeral 1 globally denotes the support device according to the invention.

It is suitable to support and/or protect an object such as a portion of the human body or a device or otherwise. The support device 1 can therefore be integrated into: a seat, for example for a car or otherwise, a belt for physical exercise, hospital equipment in contact with the body, parts of beds or stretchers, a container for objects, a harness for sport activities and so forth.

It comprises, in brief, a support surface **2** suitable to be placed in contact, preferably direct, with the object, at least one inflatable device **3** and at least one depressurisation device **4** positioned between the inflatable device 3 and the support surface 2.

More in detail the support surface is the surface, part of the device 4 or otherwise, which the object lies on and by which it is supported.

The inflatable device 3 is in itself known by the name of "bladder" and is for example used in the seats of luxury cars. It comprises an air chamber **30** suitable to vary its extension as a function of its internal pressure, and an inflation valve **31** suitable to allow the variation of the internal pressure of the air chamber 30 and its subsequent inflation or deflation.

The inflatable device 3 may also comprise a pump **32** connected to the inflation valve 31 and suitable to implement the changes of pressure and volume of the air chamber upon command by a user.

Several inflatable devices 3 may be present or even several air chambers 30 connected to a single inflatable device 3, so that the shape of the device 3 is of the appropriate type.

The depressurisation device 4 comprises a main housing **40** impermeable to the passage of fluid, flexible and defining a main volume **40a;** an inner casing **41** permeable to the passage of fluid, flexible and placed inside the main casing 40 so as to define at least a portion of the inner volume 40a; a plurality of filler particles **42** housed in the inner casing 41; and a depressurisation valve **43** suitable to form or interrupt a connection for fluid passage, preferably gaseous (in particular air) between said main volume 40a and the external environment and suitable to permit the depressurisation of said volume 40a defining a relaxed configuration in which said filler particles 42 are movable inside said inner casing 41; and a compressed configuration in which said filler particles 42 are compacted and substantially define at least one solid body **42a.**

Furthermore, the depressurisation 4 may advantageously provide for one or more walls **44** permeable to the passage of fluid, flexible and suitable to divide the inner casing 41 into a plurality of containers **41a** each of which is suitable to contain filler particles 42. Obviously the walls 44 subdividing the casing are suitable to obstruct the passage through said walls 44 of filler particles 42.

The inner casing 41 and the walls 44 are preferably made entirely of the same material permeable to fluids and elastic so as to vary its extension without forming puckers during the transition from the relaxed to the compressed configuration. More in particular, the inner casing 41 and the walls 44 are in foam material. The term foam material is understood to mean in particular: open cell polymeric material or the like, in particular foam, elastic polyurethane foam, commonly called foam rubber, other polymeric foams or other foam material. In particular at least a portion 41b of the casing 41 is in foam material, more particularly the portion in contact with the object.

Alternatively they are made of flexible and elastic fabric or otherwise.

Lastly, the inner casing 41 and the walls 44 are integrally connected to each other, preferably by gluing. In particular, the gluing is possible and appropriate in the case in which the walls are in foam material.

The filler particles 42 may be of various shapes, sizes and materials, and be of different types so as to define a particular physical property of the set of particles, i.e. of the solid body 42a, when the device 1 passes into the compressed configuration.

In particular, they may be made of the same material and have for example sizes and shapes which may also vary from one particle to another or, alternatively, be the same shape and size and be made of materials that are partially different but which have similar mechanical characteristics. In another alternative, the filler particles 42 are homogeneous i.e. substantially all have a similar size, shape and construction material.

In particular, the particles 42 are homogeneous within the individual containers 41a, while different containers 41a may have particles of different types, so as to create for example a softer surface layer and a more resilient inner part.

The particles 42 may be made of one or more of the following materials: polymers such as: PPE (polyphenyl ethers), rubber or thermoplastic polymers, EPS (expanded polystyrenes), TPU (thermoplastic polyurethane) and E-TPU (engineering thermoplastic polyurethane), cork, closed cell polymers and otherwise.

The main casing 40 is preferably made of a polymeric membrane and is elastic so as to allow the device 43 to adapt to the shape of the object, such as the body portion to which said device is associated. In detail, it is preferably in TPU film or EVA closed cell foam, in polychloroprene or Neoprene®, polyvinyl chloride or composite materials or otherwise.

In order to vary its configuration, the depressurisation device 4 preferably comprises a control pump **45** suitable to adjust, by means of the depressurisation valve 43, the pressure of the main casing 40, and thus inside the inner casing 41 and the containers 41a, commanding the variation of the configuration of the support device 1 and in particular of the filler particles 42.

The control pump 45 and the pump 32 can also, at least in part, be made of the same device, and be suitable to expel air from the main casing 40 and put it in the air chamber 30.

Other softeners layers or the like may be arranged between the surface and the depressurisation device 4.

The device 1 is lastly preferably integrated in a seat 10, which suitably comprises two support devices 1, one placed at the backrest and one at the seat.

The functioning of a device, described above in a structural sense, is as follows.

The user of the support device 1 sits on the seat 10 or positions the object as appropriate. In particular, he comes into contact with the support surface 2.

Subsequently the user increases the volume of the air chamber 30, by means of the pump 32, until he finds a comfortable or adequate configuration.

Subsequently, the user commands the transition of the depressurisation device 4 from the relaxed to the compressed configuration.

In particular, the control pump 45 withdraws air from the main casing 40 by means of the depressurisation valve 43.

The withdrawal of air from the main casing 40 places the device 4 in a vacuum which thus contracts so that the filler particles 42 of each container 41a compact to form a solid body 42a, perfectly counter-shaped to the object.

Alternatively the two phases of inflation of the inflatable device 3, and in particular of the air chamber 30, and deflation of the depressurisation device 4, and in particular of the main casing 40, take place simultaneously, and suitably at least in part the same air is transferred from the depressurisation device 4 to the inflatable device 3.

Consequently, the inflatable device 3 expands compressing, against the object, the depressurisation device 4 which deforms counter shaping the support surface 2 to the object.

At the same time, the withdrawal from the main casing 40 places the containers 41a in a vacuum, which contract, so that the filler particles 42 of each container 41a compact to form a solid body 42a which conforms to the shape of the object. Once terminated the use of the support device 1, the user can command the return of the depressurisation device 4 to a relaxed configuration by means of the depressurisation valve 43 and the deflation of the inflatable device 3 by means of the inflation valve 31 or the other means described.

The invention achieves some important advantages.

A first important advantage is represented by the fact that the support device 1 proves suitable to support in a practically perfect manner an object such as a body part of a person or otherwise.

This advantage has been achieved, in accordance with the technical features disclosed in claim 1 or corresponding method claim 10, by introducing between the support surface 2 and the at least one air chamber of the inflatable device 3, the depressurisation device 4 which, when it passes into the compressed configuration, forms a solid body 42a able to support the weight of the user.

This aspect is further increased by the possibility of subdividing the inner casing 41 into a plurality of separate containers 41a which permit a homogeneous distribution of the filler particles 42 all along the support device 1 preventing said particles 42 from accumulating in only some portions of the inner casing 41.

Another advantage is the presence of the walls 44 which makes it possible to obtain containers 41a having magnitudes selected in the three dimensions, in particular height, given by the height of the individual walls 44.

Moreover, thanks to said subdivision into separate containers 41a it is possible to make solid bodies 42a of different sizes and, therefore, adaptable to the specific needs of each body portion.

Moreover, said subdivision makes it possible to have different types of particles 42 between the various containers 41a and, thus, to obtain solid bodies 42a with different physical-mechanical properties according to the type of particles 42.

A further advantage is the fact that, when the depressurisation device 4 passes into the compressed configuration, the inner casing 41 and the walls 44, being made of foam material, assume an extremely reduced thickness and, therefore, allow the solid bodies 42a of adjacent containers 41a to come substantially in contact with each other, optimising the support capacity of the depressurisation device 4. At the same time, foam material is known to have a high shape memory, which allows it to always return when in a relaxed configuration, to its original shape and thus allow it to give a defined shape to the device 1 in a relaxed configuration.

This aspect is further increased by the adoption of gluing to join together the inner casing 41 and the walls 44, an expedient permitting a reduction of production costs. Variations may be made to the invention without departing from the scope of the inventive concept expressed in the independent claims and by the relative technical equivalents. All the elements as described and claimed may be replaced and the details, materials, shapes and dimensions may be any if thereby remaining within the scope of the invention as defined by the appended claims.

## Claims

1. Support device (1) comprising, a support surface (2) suitable to be placed in contact with an object; at least one inflatable device (3), comprising an air chamber (30) suitable to vary its extension depending on the internal pressure thereof, and an inflation valve (31) suitable to permit a variation of the pressure inside said air chamber (30); **characterised in that** it comprises at least a depressurisation device (4) positioned between said at least one air chamber (30) and said support surface (2) and comprising: a main casing (40) impermeable to the passage of fluid, flexible and defining a main volume (40a); at least an inner casing (41) placed inside said main casing (40), permeable to the passage of fluid and flexible; filler particles (42) housed in said inner casing (41); a depressurisation valve (43) suitable to form or interrupt a connection for fluid passage between said main volume (40) and the external environment and suitable to permit the depressurisation of said main volume (40a) defining a relaxed configuration in which said filler particles (42) are movable inside said at least one inner casing (41); and a compressed configuration in which said filler particles (42) are compacted and substantially define at least one solid body (42a).

2. Support device (1) according to claim 1, wherein at least part of said inner casing (41) is in foam material.

3. Support device (1) according to claim 1, wherein the part of said inner casing (41) at the support surface (2) is in foam material.

4. Support device (1) according to one or more of the previous claims, wherein said depressurisation device (4) comprises at least one wall (44) permeable to the passage of fluid, and suitable to sub-divide said inner casing (41) into a plurality of containers (41a) each of which suitable to contain said filler particles (42).

5. Support device (1) according to the previous claim, wherein said at least one wall (44) is in foam material.

6. Support device (1) according to one or more of the claims 4-5, wherein said at least one wall (44) and said inner casing (41) are made of the same material.

7. Support device (1) according to one or more of the claims 4-6, wherein said at least one wall (44) and said inner casing (41) are connected to each other by gluing.

8. Seat (10) comprising at least one support device (1) according to one or more of the previous claims.

9. Seat (10) according to the previous claim, comprising two of said support devices (1), and in which one of them is positioned at the backrest of said seat and one of them is positioned in the seat of said seat.

10. Method of use of a support device (1) according to one or more of the previous claims, comprising an inflation step of said inflatable device (3) and **characterised by** a depressurisation step of said depressurisation device (4).

11. Method of use of a support device (1) according to the previous claim, wherein said inflation step and said depressurisation step of said depressurisation device (4) are performed contemporaneously.

## Patentansprüche

1. Stützvorrichtung (1) umfassend eine Stützfläche (2), die geeignet ist, mit einem Gegenstand in Kontakt gebracht zu werden; mindestens eine aufblasbare Vorrichtung (3), die eine Luftkammer (30), die geeignet ist, ihre Ausdehnung abhängig von ihrem Innendruck zu verändern, und ein Aufblasventil (31), das geeignet ist, die Änderung des Innendrucks der genannten Luftkammer (30) zu gestatten, umfasst; **dadurch gekennzeichnet, dass** sie eine Unterdruckvorrichtung (4) zwischen der genannten mindestens einen Luftkammer (30) und der genannten Stützfläche (2) und Folgendes umfasst: eine für Fluide undurchlässige, biegsame und ein Hauptvolumen (40a) definierende Haupthülle (40); mindestens eine für Fluide durchlässige und biegsame Innenhülle (41) im Inneren der genannten Haupthülle (40); in der genannten Innenhülle (41) untergebrachte Füllpartikel (42); ein Druckminderventil (43), das geeignet ist, eine Verbindung für den Durchgang von Fluiden zwischen dem genannten Hauptvolumen (40) und der Umgebung außerhalb des genannten Hauptvolumens (40) zu bilden oder zu unterbrechen und geeignet ist, die Druckminderung des genannten Hauptvolumens (40a) zu gestatten und so eine entspannte Konfiguration zu definieren, in der die genannten Füllpartikel (42) im Inneren der genannten Innenhülle (41) beweglich sind; und eine komprimierte Konfiguration, in der die genannten Füllpartikel (42) verdichtet sind und im Wesentlichen mindestens einen Festkörper (42a) definieren.

2. Stützvorrichtung (1) nach Anspruch 1, bei der mindestens ein Teil der genannten Innenhülle (41) aus Schaummaterial besteht.

3. Stützvorrichtung (1) nach Anspruch 1, bei der der Teil der genannten Innenhülle (41) an der Stützfläche (2) aus Schaummaterial besteht.

4. Stützvorrichtung (1) nach einem oder mehreren der vorangegangenen Ansprüche, bei der die genannten Unterdruckvorrichtung (4) mindestens eine für den Durchgang von Fluiden durchlässige Wand (44) umfasst, die geeignet ist, die genannte Innenhülle (41) in eine Vielzahl von Behältern (41a) zu unterteilen, von denen jeder geeignet ist, die genannten Füllpartikel (42) zu enthalten.

5. Stützvorrichtung (1) nach dem vorangegangenen Anspruch, bei der mindestens eine Wand (44) aus Schaummaterial besteht.

6. Stützvorrichtung (1) nach einem oder mehreren der Ansprüche 4-5, bei der die genannte mindestens eine Wand (44) und die genannte Innenhülle (41) aus demselben Material bestehen.

7. Stützvorrichtung (1) nach einem oder mehreren der Ansprüche 4-6, bei der die genannte mindestens eine Wand (44) und die genannte Innenhülle (41) miteinander durch Verkleben verbunden sind.

8. Sitz (10) umfassend mindestens eine Stützvorrichtung (1) nach einem oder mehreren der vorangegangenen Ansprüche.

9. Sitz (10) nach dem vorangegangenen Anspruch, umfassend zwei der genannten Stützvorrichtungen (1) und bei dem eine davon auf der Rückenlehne des genannten Sitzes und eine auf der Sitzfläche des genannten Sitzes angeordnet ist.

10. Verfahren zur Verwendung einer Stützvorrichtung (1) nach einem oder mehreren der vorangegangenen Ansprüche, umfassend einen Schritt des Aufblasens der genannten aufblasbaren Vorrichtung (3) und **gekennzeichnet durch** einen Schritt der Druckminderung der genannten Unterdruckvorrichtung (4).

11. Verfahren zur Verwendung einer Stützvorrichtung (1) nach einem oder mehreren der vorangegangenen Ansprüche, bei der der genannte Schritt des Aufblasens und der genannte Schritt der Druckminderung gleichzeitig erfolgen.

## Revendications

1. Dispositif de support (1) comprenant, une surface de soutien (2) destinée à être placée au contact d'un objet ; au moins un dispositif gonflable (3), comprenant une chambre d'air (30) destinée à varier son extension en fonction de sa pression interne, et une valve de gonflage (31) destinée à permettre la variation de la pression interne de ladite chambre d'air (30) ; **caractérisé en ce qu'**il comprend un dispositif à dépression (4) interposé entre ladite au moins une chambre d'air (30) et ladite surface de soutien (2) et comprenant : une enveloppe principale (40) imperméable au passage de liquide, souple et définissant un volume principal (40a) ; au moins une enveloppe intérieure (41) située à l'intérieur de ladite enveloppe principale (40), perméable au passage de liquide et souple ; des particules de remplissage (42) logées dans ladite enveloppe intérieure (41) ; une valve de dépressurisation (43) destinée à réaliser ou interrompre une liaison de passage de liquide entre ledit volume principal (40) et l'environnement extérieur audit volume principal (40) et destinée à permettre la dépressurisation dudit volume principal (40a) définissant une configuration relâchée où lesdites particules de remplissage (42) sont mobiles à l'intérieur de ladite enveloppe intérieure (41); et une configuration comprimée où lesdites particules de remplissage (42) sont compactées et définissent essentiellement au moins un corps solide (42a).

2. Dispositif de support (1) selon la revendication 1, où au moins une partie de ladite enveloppe intérieure (41) est en mousse.

3. Dispositif de support (1) selon la revendication 1, où la partie de ladite enveloppe intérieure (41) au niveau de la surface de soutien (2) est en mousse.

4. Dispositif de support (1) selon une ou plusieurs des revendications précédentes, où ledit dispositif à dépression (4) comprend au moins une paroi (44) perméable au passage de liquide et destinée à diviser ladite enveloppe intérieure (41) en une pluralité de récipients (41a) chacun desquels étant destiné à contenir lesdites particules de remplissage (42).

5. Dispositif de support (1) selon la revendication précédente, où ladite au moins une paroi (44) est en mousse.

6. Dispositif de support (1) selon une ou plusieurs des revendications 4-5, où ladite au moins une paroi (44) et ladite enveloppe intérieure (41) sont réalisées dans le même matériau.

7. Dispositif de support (1) selon une ou plusieurs des revendications 4-6, où ladite au moins une paroi (44) et ladite enveloppe intérieure (41) sont fixées l'une à l'autre par collage.

8. Siège (10) comprenant au moins un dispositif de support (1) selon une ou plusieurs des revendications précédentes.

9. Siège (10) selon la revendication précédente, comprenant deux desdits dispositifs de support (1), et où l'un d'eux est disposé au niveau du dossier et l'autre est disposé au niveau de l'assise dudit siège.

10. Procédure d'utilisation d'un dispositif de support (1) selon une ou plusieurs des revendications précédentes, comprenant une phase de gonflage dudit dispositif gonflable (3) et **caractérisée par** une phase de dépressurisation dudit dispositif à dépression (4).

11. Procédure d'utilisation d'un dispositif de support (1) selon une ou plusieurs des revendications précédentes, où ladite phase de gonflage et ladite phase de dépressurisation sont réalisées en même temps.
